# EUROPEAN PATENT SPECIFICATION

(11) **EP 0 991 222 B1**
(45) Date of publication and mention of the grant of the patent: **16.04.2003**
(21) Application number: 98402408.3
(22) Date of filing: 30.09.1998
(51) Int. Cl.: H04L 1/12, H04B 7/005

(54) **Method and arrangements for transition between a low power state and a full power state in a communication system**
Verfahren und Einrichtung für den Übergang eines niedrigen Leistungszustandes zu einem hohen Leistungszustand in einem Kommunikationssystem
Procédé et dispositif pour une transition d' un état de puissance faible à un état de puissance haute dans un système de communication

(43) Date of publication of application: 05.04.2000
(73) Proprietor: ALCATEL, 75008 Paris (FR)
(72) Inventor: Cassiers, Raphael Paul Claude André, 1420 Eigenbrakel (BE); Reusens, Peter Paul Frans, 9270 Laarne (BE); van Bruyssel, Danny, 9140 Temse (BE)
(74) Representative: Narmon, Gisèle Marie Thérèse

(56) References cited:
- WO-A-96/04718
- WO-A-98/36508

## Description

The present invention relates to a method to transit in a communication system from a first power state to a second power state as defined in the non-characteristic part of claim 1, state transition arrangement to be used in a receiver to carry out steps of these methods as defined in the non-characteristic parts of claim 6, and communication system comprising a transmitter and receiver including such state transition arrangements as defined in the non-characteristic ports of claims 8.

Such a state transition method and arrangements to perform such o method are already known in the art, e.g. from *the temporary document WH-031 submitted on June 29, 1998 to ITU Study Group 15 which is an* ADSL *(Asymmetric Digital Subscriber Line) standardisation forum. This document WH-031 is entitled 'Time Domain Rote Adaptation Based L1 Stale for G. Lite Modem Power Down Management' and originates from ITeX*. Therein, a mechanism for transition from the L1 state, a low power/low bit rote state, to on L0 state, a full power/full bit rate state, of an ADSL (Asymmetric Digital Subscriber Line) modem is described. As indicated in paragraph 3 of the cited document, transition from the low power to the full power state requires transmission of a predetermined recognisable state transition indication, called EOC message. Such an EOC message is also transferred between transmitter and receiver to initiate transition from the full power state to the low power state, as can be derived from paragraph 2 of the mentioned ITU submission. Due to the requirement to send such a predetermined state transition indication, the transition time to switch from the low power state to the full power state or vice versa is not minimised in the known solution. In particular in communication systems with buffers temporarily storing data, larger state transition times imply increased probability for buffer overflow, congestion and even loss of data. If for instance ATM (Asynchronous Transfer Mode) cells have to be transferred over an ADSL (Asymmetric Digital Subscriber Line) network segment, risk for ATM buffer overflow increases if the wake-up time, i.e. the transition time from the low power state to the full power state, of the ADSL network segment is large. As will be explained later in this application, this drawback of the solution known from the cited document is even more dramatic in case data symbols are transferred at a low bit rate during the low power state.

An object of the present invention is to provide a method and arrangements for transition between a low power state and a full power state similar to the known one, but wherein the transition time for switching between the full power state and low power state is minimised.

According to the invention, this object is achieved by the method to transit in a communication system from a first power state to a second power state as defined in claim 1 , the state transition arrangement to be used in a receiver to carry out steps of these methods as defined in claims 6, and the communication system comprising a transmitter and receiver including such state transition arrangements as defined in claims 8.

Indeed, provided that the receiver is able to discriminate a data symbol transmitted at a second power from a data symbol transmitted at a first power, the transition from the first power state to the second power state can be initiated by transmitting a data symbol at the second power without first transmitting a predetermined state transition indication.
A way to discriminate in the receiver between data symbols transmitted at a first power and data symbols transmitted at a second power is by carrying out quality measurements on the received data symbols, such as for instance signat-to-noise ratio (SNR) measurements. Indeed, for a data symbol sent at full power, the signal level will be significantly higher than the noise level so that the SNR measurement allows to detect the full power data symbol or the low power datasymbol.
In this way, the state transition time is reduced with the transmission time for the predetermined indication used in the known solution.
An additional feature of the present invention is that the transition from a first state to a second power state a transition from a low power state to a full power state as defined in claim 2 or a transition from a full power state to a low power state as defined in claim 5.
Similarly, again provided that the receiver is able to discriminate a data symbol transmitted at full power from a data symbol transmitted at low power, the transition from the full power state to the low power state can be initiated by transmitting a data symbol at low power without first transmitting a predetermined state transition indication.
It is however noticed that for the transition from the full power state to the low power state, the duration of the transition is less critical because no data can get lost due to buffer congestion in this situation.

Summarising, the data symbol that indicates the transition from the low power state to the full power state or vice versa, according to the present invention carries user data that may be further processed by the receiver instead of having a predetermined contents. An advantageous consequence thereof is that the communication system is faster operating in the new state.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

Another feature of the method according to the present invention is defined by claim 3 and claim 8.

Thus, the data symbol send at full power, indicating the transition from the low power state to the full power state, is processed by the receiver only if it's quality exceeds a certain threshold. If the reception quality does not exceed this threshold, the receiver accumulates the data symbol but does not process the data symbol to demodulate information therefrom.

Furthermore, an additional feature of the method according to the present invention is defined by claim 4.

Indeed, in case the data symbols are sent at a low bit rote during the low power state, the transition time from the low power state to the full power state is even more reduced if transmission of a full power data symbol without previous transmission of a predetermined state transition indication is combined with interruption of the actually transmitted low power data symbol. This is so because according to the known method, the transmitter has to wait until the end of the low power data symbol before it can indicate the transition to the full power state, which may cost several data symbol times because of the low bit rate at which the low power data symbol is transferred. Evidently, the full power data symbol according to the present invention transferred between the transmitter and receiver to initiate the transition from the low power state to the full power state has to be a copy of the interrupted low power data symbol unless information gets lost.

The above mentioned and other objects and features of the invention will become more apparent and the invention itself will be best understood by referring to the following description of an embodiment taken in conjunction with the accompanying drawings wherein:
Fig. 1 is a block scheme of a communication system with a transmitter TX and receiver RX including state transition arrangements according to the present invention;
Fig. 2 is a data symbol flow diagram illustrating transition from the low power state LPS to the full power state FPS in a first embodiment of the known method;
Fig. 3 is a data symbol flow diagram illustrating transition from the low power state LPS to the full power state FPS in a first embodiment of the method according to the present invention;
Fig. 4 is a data symbol flow diagram illustrating transition from the low power state LPS to the full power state FPS in a second embodiment of the known method, wherein the low power state LPS corresponds to a low bit rate state; and
Fig. 5 is a data symbol flow diagram illustrating transition from the low power state LPS to the full power state FPS in a second embodiment of the method according to the present invention, wherein the low power state LPS corresponds to a low bit rate state.

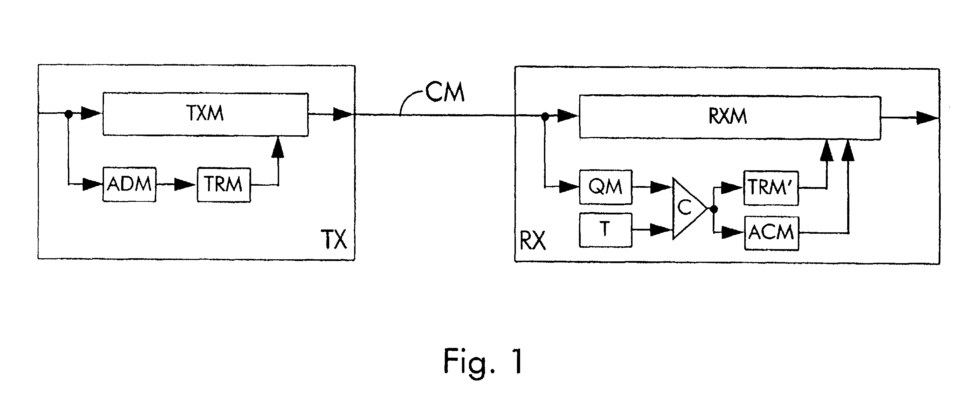

In the communication system of Fig. 1, a transmitter TX is coupled to a receiver RX via a communication medium CM. The transmitter TX includes transmission means TXM, activity detection means ADM and state transition means TRM. The receiver RX contains reception means RXM, quality measurement means QM, a comparator C, a threshold value generator T, state transition means TRM', and accumulation means ACM.

In the transmitter TX, the transmission means TXM are coupled between a data input terminal and a data symbol output terminal of the transmitter TX. The activity detection means ADM and the transition means TRM are cascade coupled between the data input terminal of the transmitter TX and a state transition control terminal of the transmission means TXM. In the receiver RX, the reception means are coupled between a data symbol input terminal and a data output terminal of the receiver RX. The quality measurement means QM is coupled between the just mentioned data symbol input terminal of the receiver RX and a first input terminal of the comparator C. To a second input terminal of the comparator C, on output of the threshold value generator T is coupled. An output terminal of the comparator C further is connected to input terminals of both the transition means TRM' and the accumulator means ACM. The transition means TRM' has an output terminal interconnected with a state transition control terminal of the reception means RXM, and the accumulation means ACM is provided with an output terminal interconnected with a process control terminal of the reception means RXM. The communication medium CM in Fig. 1, which is supposed to be a twisted pair copper telephone wire, interconnects the data symbol output terminal of the transmitter TX, which is supposed to be a DMT (Discrete Multi Tone) transmitter operating according to the ADSL (Asymmetric Digital Subscriber Line) physical layer protocol; and the data symbol input terminal of the receiver RX, which consequently is supposed to be a DMT (Discrete Multi Tone) receiver operating according to the ADSL (Asymmetric Digital Subscriber Line) physical layer protocol. The data symbols transferred between the transmitter TX and receiver RX are discrete multi tone (DMT) symbols.

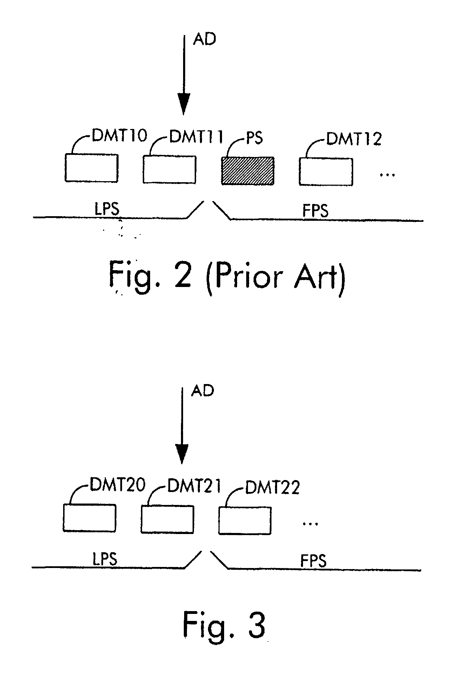

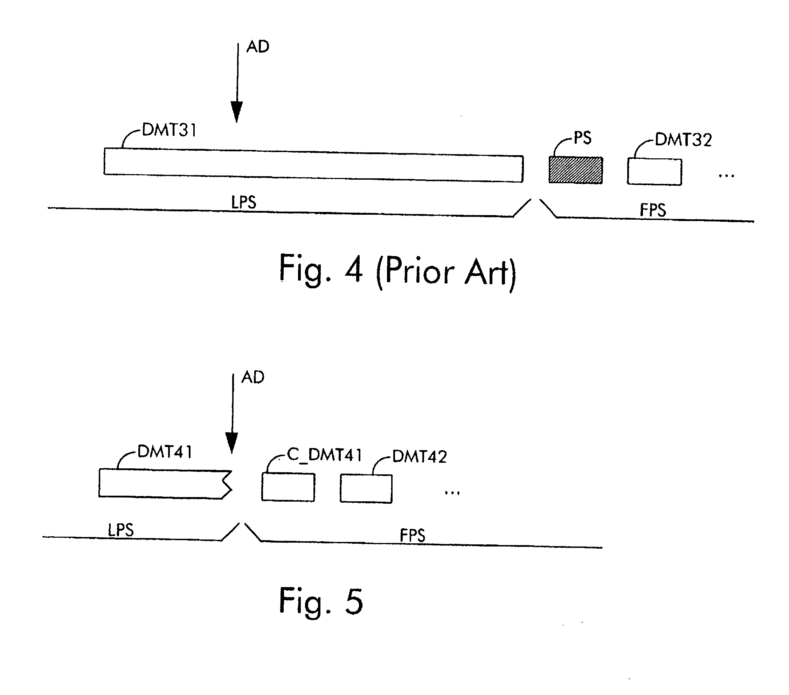

The operation of the different functional blocks of the transmitter TX and receiver RX in Fig. 1 is best described with reference to Fig. 3 and Fig. 5. To illustrate the difference with the prior art system, Fig. 2 and Fig. 4 are inserted.

In Fig. 2 and Fig. 3, an embodiment of the invention is considered wherein the transmitter TX and receiver RX both can operate in a low power state LPS and a full power state FPS, but the bit rate remains the same in both states. The data symbols DMT10, DMT11, DMT20 and DMT21, transmitted at low power in Fig. 2 and Fig. 3 consequently have the same length in time as the data symbols DMT12 and DMT22 transmitted at full power. In the prior art system illustrated by Fig. 2 as well as the new system illustrated by Fig. 3, the transmitter TX and receiver RX are operating in the low power state LPS until the activity detection means ADM in the transmitter TX detect data that need to be transmitted towards the receiver RX at the data input terminal of the transmitter TX. The point in time of activity detection is marked by AD in Fig. 2 and Fig. 3. The activity detection means ADM informs the transition means TRM that data have to be transmitted and the latter transition means TRM generates a control signal indicating that the transmission means TXM has to transit from the low power state LPS to the full power state FPS, and applies this control signal to the state transition control terminal of the transmission means TXM. In the prior art system of Fig. 2, the transmission means waits until the end of the currently transmitted data symbol DMT11, thereupon transmits a symbol PS with predetermined contents, and afterwards sends a first data symbol DMT12 at full power. A receiver, capable to communicate with such a known transmitter monitors the communication channel CM until it recognises the predetermined symbol PS and thereupon transits to the full power state FPS wherein it is able to receive the full power data symbol DMT12 and to demodulate data therefrom.

The time required for transmission of the predetermined symbol PS in Fig. 2 is used more efficiently in Fig. 3 so that the transition time to the full power state FPS is shortened. Upon detection of activity at the data input terminal of the transmitter TX, the activity detection means ADM and the transition means TRM again control the transmission means TXM to switch from the low power state LPS to the full power state FPS, but the transmission means TXM now is no longer enabled to transmit a symbol PS with predetermined contents but immediately sends a data symbol DMT22 at full power. The receiver RX, capable to communicate with this transmitter TX, includes means that can discriminate between a low power data symbol and a full power data symbol. In Fig. 1, the receiver RX thereto is equipped with the quality measurement means QM which continuously measure the signal-to-noise ratio (SNR) of the incoming signal. The comparator C activates the transition means TRM' in case the measured signal-to-noise ratio (SNR) exceeds a threshold value generated by the threshold value generator T, or activates the accumulation means ACM in case the measured signol-to-noise ratio (SNR) does not exceed this threshold value. Upon receipt of the low power data symbols DMT20 and DMT21 by the receiver RX, the accumulation means ACM is thus activated and controls the reception means RXM to accumulate the received symbols instead of processing them and demodulating information therefrom. Upon arrival of the full power data symbol DMT22, the comparator C de-activates the accumulation means ACM and activates the transition means TRM'. The latter transition means TRM' controls the reception means RXM to switch from the low power state LPS to the full power state FPS and to process the incoming data symbol DMT22 instead of accumulating it.

In Fig. 4 and Fig. 5, communication systems are considered wherein the low power state LPS corresponds to a low bit rate state. This means that data symbols DMT31, DMT41 transferred at low power are also transferred at a low bit rate compared to the full bit rate at which the data symbols DMT32, C_DMT41 and DMT42 are transferred during the full power state FPS. Data symbols DMT31 and DMT41 transferred in the low power state LPS consequently are longer in time than data symbols DMT32, C_DMT41 and DMT42 transferred at full power. In the prior art system, whose working is illustrated by Fig. 4, the transition from the low power state LPS to the full power state FPS is not only delayed by transmission of a symbol PS with predetermined contents, but also by waiting for the end boundary of the currently transmitted data symbol DMT31, from the moment on activity is detected at the input of the transmitter TX. This moment is indicated by AD in Fig. 4. In the system according to the present invention, illustrated by Fig. 5, transition from the low power state LPS to the full power state FPS is speed up by immediately sending a data symbol C_DMT41 without previous transmission of a predetermined symbol PS, similar to the above described embodiment. Moreover, the transition to the full power state FPS in Fig. 5 is speed up by interrupting transmission of the currently transmitted data symbol DMT41 at the moment activity is detected at the input of the transmitter TX. A copy C_DMT41 of the interrupted data symbol DMT41 is integrally transmitted at full power and full bit rote at the beginning of the full power state FPS to avoid loss of information. Nevertheless, the average transition time to go from the low power state LPS to the full power state FPS is reduced provided that the bit rate is decreased by a factor higher than 2 in the low power state LPS. Indeed, in that case, the copy C_DMT41 of the currently transmitted data symbol DMT41 will be received in more than 50 % of the transitions from the low power state LPS to the full power state FPS earlier than the original data symbol DMT41 if it would have been transmitted completely. Summarising, interruption of the currently transmitted low power data symbol DMT41 even more speeds up transition from the low power state LPS to the full power state FPS in communication systems wherein data symbols ore transmitted in the low power state LPS at a bit rate which is at least a factor 2 smaller than the bit rote at which data symbols are transferred during the full power state FPS.

The principles described in the foregoing paragraphs to reduce the transition time to go from the low power state LPS to the full power state FPS, for evident reasons are also applicable to the transition from the full power state FPS to the low power state LPS. A person skilled in the art however will appreciate that for the transition from the full power state FPS to the low power state LPS, the transition time is less critical because a longer transition time there cannot lead to loss of information, congestion of buffers, or the like. A reduction of the transition time to go from the full power state FPS to the low power state LPS nevertheless has an effect on the consumption of power in the communication system and for this reason is still advantageous.

A first remark is that, although the data symbols in the above described embodiment may be transported over a telephone line like in ADSL (Asymmetric Digital Subscriber Lines) or VDSL (Very High Speed Digital Subscriber Lines) systems, the applicability of the present invention is not restricted by the transmission medium via which the signal is transported. In particular, the present invention is applicable to connections over a cable, an optical fiber, a satellite link, a radio link through the air, and so on, between a transmitter and receiver that can be operating in a full power state and low power state.

The invention also is not only related to systems wherein the ADSL (Asymmetric Digital Subscriber Line) or any similar physical layer protocol is used. A person skilled in the art will be able to adapt the above described embodiment so that it is applicable in any other system wherein a transmitting modem and receiving modem have full power and low power states.

Another remark is that embodiments of the present invention are described above in terms of functional blocks. From the functional description of these blocks it will be obvious for a person skilled in the art of designing electronic devices how embodiments of these blocks can be manufactured with well-known electronic components. A detailed architecture of the contents of the functional blocks hence is not given for most of them.

While the principles of the invention have been described above in connection with specific apparatus, it is to be clearly understood that this description is made only by way of example and not as a limitation on the scope of the invention.

## Claims

1. Method to transit in a communication system comprising a transmitter (TX), a communication medium (CM) and a receiver (RX), from a first power state (LPS) wherein data symbols (DMT10, DMT11, DMT20, DMT21, DMT31, DMT41) are transferred between said transmitter (TX) and said receiver (RX) at a first power to a second power state (FPS) wherein data symbols (DMT12, DMT22, DMT32, C_DMT41, DMT42) are transferred between said transmitter (TX) and said receiver (RX) at a second power, said method including the steps of:
a. detecting activity in said transmitter (TX) during said first power state (LPS); and
b. transiting from said first power state (LPS) to said second power state (FPS) in said transmitter (TX),
**CHARACTERISED IN THAT** said method further comprises the steps of:
c. transmitting a data symbol (DMT22, C_DMT41) at said second power from said transmitter (TX) to said receiver (RX);
d. detecting in said receiver (RX) said data symbol (DMT22, C_DMT41) transmitted at said second power by:
d1. measuring a quality of said data symbol (DMT22, C_DMT41) in said receiver (RX); and
d2. Making a comparison of said quality of said data symbol (DMT22, C_DMT41) with a predetermined threshold (T); and
e. Transiting from said first power state (LPS) to said second power state (FPS) in said receiver (RX) based on the result of said comparison.

2. Method according to claim 1,
**CHARACTERISED IN THAT** said first power is a low power, said first power state (LPS) is a low power state , said second power is full power and said second power state (FPS) is a full power state.

3. Method according to claim 2,
**CHARACTERISED IN THAT** said method further comprises the step of:
e1. transiting from said low power state (LPS) to said full power state (FPS) in said receiver (RX) and processing said data symbol (DMT22, C_DMT41) in case said quality exceeds said predetermined threshold (T); or
e2. staying in said low power state (LPS) in said receiver (RX) and accumulating said data symbol (DMT22, C_DMT41) in case said quality does not exceed said predetermined threshold (T).

4. Method according to claims 2 or 3,
**CHARACTERISED IN THAT** during said low power state (LPS) data symbols (DMT31, DMT41) are transferred between said transmitter (TX) and said receiver (RX) at a low bit rate, and during said full power state (FPS) data symbols (DMT32, C_DMT41, DMT42) are transferred between said transmitter (TX) and said receiver (RX) at fuil bit rate, and **in that** said data symbol (C_DMT41) sent at full power is a copy of a previously transmitted data symbol (DMT41) whose transmission at low power was interrupted by said transmitter (TX) upon detection of said activity.

5. Method according to claim 1,
**CHARACTERISED IN THAT** said first power is a full power, said first power state (LPS) is a full power state, said second power is a low power and said second power state (FPS) is a low power state.

6. State transition arrangement to be used in a receiver (RX) being adapted to receive data symbols (DMT10, DMT11, DMT20, DMT21, DMT31, DMT41) at a first power when it is operating in a first power state (LPS) and to receive data symbols (DMT12, DMT22, DMT32, C_DMT41, DMT42) at second power when it is operating in a second power state (FPS), said arrangement comprising:
a. reception means (RXM) coupled between an input terminal and an output terminal of said receiver (RX) and adapted to receive incoming data symbols transferred over a communication medium (CM),
**CHARACTERISED IN THAT** said arrangement further comprises:
b. detection means (QM, C, T), coupled to said input terminal of said receiver (RX) and adapted to detect a data symbol (DMT22, C_DMT41) transmitted at said second power when said reception means (RXM) is operating in said first power state (LPS); said detection means (QM, C, T) comprising:
b1. quality measurements means (QM), adapted to measure a quality of said data symbol (DMT22, C_DMT41) transmitted at said second power; and
b2. comparison means (C), coupled to said quality measurement means (QM) and adapted to make a comparison of said quality with a predetermined threshold value (T); and
c. transition means (TRM'), coupled to said detection means (C) and adapted to bring said reception means (RXM) from said first power state (LPS) into said second power state (FPS), upon detection of said data symbol (DMT22, C_DMT41) transmitted at said second power, said detection being based on said comparison

7. State transition arrangement according to claim 6,
**CHARACTERISED IN THAT**:
c1. said transition means (TRM') is adapted to be activated by said comparison means (C) in case said quality exceeds said predetermined threshold (T), and further **in that** said arrangement comprises:
d. accumulation means (ACM), coupled to said comparison means (C) and adapted to accumulate said data symbol (DMT22, C_DMT41) transmitted at said second power, said accumulation means (ACM) being adapted to be activated by said comparison means (C) in case said quality does not exceed said predetermined threshold (T) and said first power is a low power, said first power state (LPS) is a low power state, said second power is full power and said second power state (FPS) is a full power state.

8. Communication system comprising a transmitter (TX), a communication medium (CM) and a receiver (RX), wherein data symbols (DMT10, DMT11, DMT20, DMT21, DMT31, DMT41) are transferred between said transmitter (TX) and said receiver (RX) at a first power in a first power state (LPS) and wherein data symbols (DMT12, DMT22, DMT32, C_DMT41, DMT42) are transferred between said transmitter (TX) and said receiver (RX) at a second power in a second power state (FPS),
**CHARACTERISED IN THAT** said transmitter (TX) comprises a state transition arrangement said arrangement comprises:
a. transmission means (TXM), coupled between on input terminal and on output terminal of said transmitter (TX) and adapted to embed incoming data in data symbols for transmission over a communication medium (CM);
b. activity detection means (ADM), coupled to said input terminal of said transmitter (TX) and adapted to detect activity when soid transmission meons (TXM) is operating in said first power state (LPS); and
c. transition means (TRM), coupled between an output of said activity detection means (ADM) and a state control input of said transmission means (TXM), and adapted to bring said transmission means (TXM) from said first power state (LPS) into said second power state (FPS),
wherein said transmission means (TXM), when brought into said second power state (FPS) under control of said transition means (TRM), is adapted to transmit a data symbol (DMT22, C DMT41) at second power without first sending a predetermined state transition indication (PS). and said receiver (RX) comprises a state transition arrangement as defined in claim 6 or claim 7.

## Patentansprüche

1. Verfahren zum Steuern eines Überganges in einem Kommunikationssystem. bestehend aus einem Sender (TX), einem Kommunikations- Medium (CM) und einem Empfänger (RX), von einem ersten Leistungszustand (LPS), in dem Datensymbole (DMT10, DMT11, DMT20, DMT21, DMT31, DMT41) zwischen besagtem Sender (TX) und besagtem Empfänger (RX) mit einer ersten Leistung übertragen werden, zu einem zweiten Leistungszustand (FPS), in dem Datensymbole (DMT12, DMT22, DMT32, C_DMT41, DMT42) zwischen besagtem Sender (TX) und besagtem Empfänger (RX) mit einer zweiten Leistung übertragen werden, wobei dieses Verfahren folgende Schritte umfasst:
a. Erkennen von Aktivität in besagtem Sender (TX) während des besagten ersten Leistungszustandes (LPS); und
b. Übergang vom besagtem ersten Leistungszustand (LPS) zu einem besagten zweiten Leistungszustand (FPS) in besagtem Empfänger (TX),
**dadurch gekennzeichnet, dass** das Verfahren weiter folgende Schritte umfasst:
c. Übertragung eines Datensymbols (DMT22, C_DMT41) mit der besagten zweiten Leistung von besagtem Sender (TX) zu besagtem Empfänger (RX);
d. Detektieren des erwähnten, mit der zweiten Leistung gesendeten. Datensymbols (DMT22, C_DMT41) in besagtem Empfänger (RX) durch:
d1. Messen einer Qualität des besagten Datensymbols (DMT22, C_DMT41) in besagtem Empfänger (RX); und
d2. Vergleich der besagten Qualität des besagten Datensymbols (DMT22, C_DMT41) mit einem vorbestimmten Schwellwert (T); und
e. Übergang von besagtem ersten Leistungszustand (LPS) zu besagtem zweiten Leistungszustand (FPS) in besagtem Empfänger (RX) aufgrund des Ergebnisses des besagten Vergleichs.

2. Verfahren nach Anspruch 1,
**dadurch gekennzeichnet, dass** die besagte erste Leistung eine niedrige Leistung ist, der besagte erste Leistungszustand (LPS) ein Zustand niedriger Leistung ist, die besagte zweite Leistung eine volle Leistung ist und das der besagte zweite Leistungszustand (FPS) ein Zustand voller Leistung ist.

3. Verfahren nach Anspruch 2,
**dadurch gekennzeichnet, dass** das besagte Verfahren weiterhin folgende Schritte umfasst:
e1. Übergang von besagtem Zustand niedriger Leistung (LPS) zu besagtem Zustand voller Leistung (FPS) in besagtem Empfänger (RX) und Verarbeitung des besagten Datensymbols (DMT22, C_DMT41) im Falle dass die besagte Qualität den besagtem vorbestimmten Schwellwert (T) übersteigt; oder
e2. Verbleiben in dem besagtem Zustand niedriger Leistung (LPS) in besagtem Empfänger (RX), und Zwischenspeichern des besagten Datensymbols (DMT22, C_DMT41) im Falle dass die besagte Qualität den besagten vorbestimmten Schwellwert (T) nicht übersteigt.

4. Verfahren nach Anspruch 2 oder 3,
**dadurch gekennzeichnet, dass** während des besagten Zustandes niedriger Leistung (LPS) Datensymbole (DMT31, DMT41) zwischen besagtem Sender (TX) und besagtem Empfänger (RX) mit niedriger Bitrate übertragen werden und dass während des besagten Zustandes voller Leistung (FPS) Datensymbole (DMT32, C_DMT41, DMT42) mit voller Bitrate zwischen besagtem Sender (TX) und besagtem Empfänger (RX) übertragen werden, und dass das besagte Datensymbol (C_DMT41), das mit voller Leistung gesendet wird, eine Kopie des zuvor übertragenen Datensymbols (DMT41) ist, dessen Übertragung mit niedriger Leistung von besagtem Sender (TX) beim Erkennen von besagter Aktivität unterbrochen wurde.

5. Verfahren nach Anspruch 1,
**dadurch gekennzeichnet, dass** besagte erste Leistung eine volle Leistung ist, besagter erster Leistungszustand (LPS) ein Zustand voller Leistung ist, besagte zweite Leistung eine niedrige Leistung ist und besagter zweiter Leistungszustand (FPS) ein Zustand niedriger Leistung ist.

6. Zustandübergangseinrichtung für die Verwendung in einem Empfänger (RX). der eingerichtet ist zum Empfang von Datensymbolen (DMT10, DMT11, DMT20, DMT21, DMT31, DMT41) mit einer ersten Leistung, wenn er in einem ersten Leistungszustand (LPS) arbeitet und zum Empfang von Datensymbolen (DMT12, DMT22, DMT32, C_DMT41, DMT42) mit einer zweiten Leistung, wenn er in einem zweiten Leistungszustand (FPS) arbeitet, wobei die Einrichtung folgendes umfasst:
a. Empfangsmittel (RXM), angeschlossen zwischen einem Eingangsanschluss und einem Ausgangsanschluss des besagten Empfängers (RX) und eingerichtet zum Empfang von eingehenden Datensymbolen, die über ein Kommunikationsmedium (CM) übertragen werden,
**dadurch gekennzeichnet, dass** die besagte Einrichtung weiterhin umfasst:
b. Detektionsmittel (QM, C, T), verbunden mit besagtem Eingangsanschluss des besagten Empfängers (RX) und eingerichtet zur Detektion eines Datensymbols (DMT22, C_DMT41), das mit besagter zweiter Leistung übertragen wurde, wenn die besagten Empfangsmittel (RXM) in besagtem ersten Leistungszustand (LPS) arbeitet; wobei die besagten Detektionsmittel (QM, C, T) folgendes umfassen:
b1. Qualitätsmessmittel (QM), eingerichtet zur Messung der Qualität des besagten Datensymbols (DMT22, C_DMT41), das mit besagter zweiter Leistung übertragen wurde; und
b2. Vergleichsmittel (C), verbunden mit besagten Qualitätsmessmitteln (QM) und eingerichtet, einen Vergleich von besagter Qualität mit einem vorbestimmten Schwellwert (T) durchzuführen; und
c. Übergangmittel (TRM'), verbunden mit besagten Detektionsmitteln (C) und eingerichtet, um die besagten Empfangsmittel (RXM) aufgrund des Ergebnisses besagten Vergleichs bei der Detektion des besagten Datensymbols (DMT22, C_DMT41), das mit besagter zweiter Leistung gesendet wurde, von besagtem ersten Leistungszustand (LPS) in besagten zweiten Leistungszustand (FPS) zu bringen.

7. Zustandübergangseinrichtung nach Anspruch 6,
**dadurch gekennzeichnet, dass**
c1. besagte Übergangmittel (TRM') so eingerichtet sind, dass die von besagten Vergleichsmitteln (C) aktiviert werden, wenn besagte Qualität den besagten vorbestimmten Schwellwert (T) übersteigt und weiterhin dadurch, das besagte Einrichtung umfasst:
d. Zwischenspeichermittel (ACM), verbunden mit besagten Vergleichsmitteln (C) und eingerichtet, um besagtes Datensymbol (DMT22, C_DMT41), das mit besagter zweiter Leistung übertragen wurde, zwischenzuspeichern, wobei besagte Zwischenspeichermittel (ACM) so eingerichtet sind, dass sie von den besagten Vergleichsmitteln (C) aktiviert werden, wenn die besagte Qualität den besagten Schwellwert (T) nicht übersteigt und die besagte erste Leistung eine niedrige Leistung ist, der besagte erste Leistungszustand (LPS) ein Zustand niedriger Leistung ist, die zweite Leistung eine volle Leistung ist und der besagte zweite Leistungszustand (FPS) ein Zustand voller Leistung ist.

8. Kommunikationssystem bestehend aus einem Sender (TX), einem Kommunikations-Medium (CM) und einem Empfänger (RX), in dem Datensymbole (DMT10, DMT11, DMT20, DMT21, DMT31, DMT41) zwischen besagtem Sender (TX) und besagtem Empfänger (RX) mit einer ersten Leistung bei einem ersten Leistungszustand (LPS) übertragen werden und Datensymbole (DMT12, DMT22, DMT32, C_DMT41, DMT42) zwischen besagtem Sender (TX) und besagtem Empfänger (RX) mit einer zweiten Leistung bei einem zweiten Leistungszustand (FPS) übertragen werden.
**dadurch gekennzeichnet, dass** der besagte Sender (TX) eine Zustandsübergangseinrichtung enthält, wobei besagte Einrichtung umfasst: Sendemittel (TXM), angeschlossen zwischen einem Eingangsanschluss und einem Ausgangsanschluss des besagten Senders (TX) und eingerichtet, um eingehende Daten in Datensymbole für die Übertragung über ein Kommunikationsmedium (CM) einzubetten;
Aktivitätserkennungsmittel (ADM), verbunden mit besagtem Eingangsanschluss des besagten Senders (TX) und eingerichtet zur Erkennung von Aktivität, wenn besagte Sendemittel (TXM) in besagtem ersten Leistungszustand (LPS) arbeiten; und Übergangsmittel (TRM), angeschlossen zwischen einem Ausgang der besagtem Aktivitätserkennungsmittel (ADM) und einem Zustandssteuereingang der besagten Sendemittel (TXM) und eingerichtet, um besagte Sendemittel (TXM) vom besagten ersten Leistungszustand (LPS) zum besagtem Leistungszustand (FPS) zu bringen, wobei besagte Sendemittel (TXM), wenn sie durch Steuerung durch die besagten Übergangsmittel (TRM) in den besagten zweiten Leistungszustand (FPS) gebracht worden sind, so eingerichtet sind, dass ein Datensymbol (DMT22, C_DMT41) mit zweiter Leistung gesendet wird, ohne dass zuvor ein vorbestimmtes Zustandübergangsdatensymbol (PS) gesendet worden ist und der besagte Empfänger (RX) eine Zustandsübergangseinrichtung, wie in Anspruch 6 oder 7 definiert, umfasst.

## Revendications

1. Procédé pour effectuer une transition dans un système de communication comprenant un émetteur (TX), un support de communication (CM) et un récepteur (RX), d'un premier état de puissance (LPS) dans lequel des symboles de données (DMT10, DMT11, DMT20, DMT21, DMT31, DMT41) sont transférés entre ledit émetteur (TX) et ledit récepteur (RX) à une première puissance, vers un second état de puissance (FPS) dans lequel des symboles de données (DMT12, DMT22, DMT32, C_DMT41, DMT42) sont transférés entre ledit émetteur (TX) et ledit récepteur (RX) à une seconde puissance, ledit procédé comprenant les étapes consistant à :
a. détecter une activité dans ledit émetteur (TX) pendant ledit premier état de puissance (LPS) ; et
b. effectuer une transition dudit premier état de puissance (LPS) vers ledit second état de puissance (FPS) dans ledit émetteur (TX),
**caractérisé en ce que** ledit procédé comprend en outre les étapes consistant à :
c. transmettre un symbole de données (DMT22, C_DMT41) à ladite seconde puissance depuis ledit émetteur (TX) vers ledit récepteur (RX) ;
d. détecter dans ledit récepteur (RX) ledit symbole de données (DMT22, C_DMT41) transmis à ladite seconde puissance par :
d1. mesure de la qualité dudit symbole de données (DMT22, C_DMT41) dans ledit récepteur (RX) ; et
d2. réalisation d'une comparaison de ladite qualité dudit symbole de données (DMT22, C_DMT41) par rapport à un seuil prédéterminé (T) ; et
e. effectuer une transition dudit premier état de puissance (LPS) vers ledit second état de puissance (FPS) dans ledit récepteur (RX), en se basant sur le résultat de ladite comparaison.

2. Procédé selon la revendication 1,
**caractérisé en ce que** ladite première puissance est une faible puissance, ledit premier état de puissance (LPS) est un état à faible puissance, ladite seconde puissance est une pleine puissance et ledit second état de puissance (FPS) est un état à pleine puissance.

3. Procédé selon la revendication 2,
**caractérisé en ce que** ledit procédé comprend en outre l'étape consistant à :
e1. effectuer une transition dudit état à faible puissance (LPS) vers ledit état à pleine puissance (FPS) dans ledit récepteur (RX) et traiter ledit symbole de données (DMT22, C_DMT41) dans le cas où ladite qualité dépasse ledit seuil prédéterminé (T) ; où
e2. rester dans ledit état à faible puissance (LPS) dans ledit récepteur (RX) et accumuler ledit symbole de données (DMT22, C_DMT41) dans le cas où ladite qualité ne dépasse pas ledit seuil prédéterminé (T).

4. Procédé selon la revendication 2 ou 3,
**caractérisé en ce que** pendant ledit état à faible puissance (LPS), des symboles de données (DMT31, DMT41) sont transférés entre ledit émetteur (TX) et ledit récepteur (RX) à faible débit binaire et pendant ledit état à pleine puissance (FPS), des symboles de données (DMT32, C_DMT41, DMT42) sont transférés entre ledit émetteur (TX) et ledit récepteur (RX) à débit binaire complet et **en ce que** ledit symbole de données (C_DMT41) envoyé à pleine puissance est une copie d'un symbole de données précédemment transmis (DMT41) dont la transmission à faible puissance a été interrompue par ledit émetteur (TX) lors de la détection de ladite activité.

5. Procédé selon la revendication 1,
**caractérisé en ce que** ladite première puissance est une pleine puissance, ledit premier état de puissance (LPS) est un état à pleine puissance, ladite seconde puissance est une faible puissance et ledit second état de puissance (FPS) est un état à faible puissance.

6. Agencement de transition d'état destiné à être utilisé dans un récepteur (RX) adapté pour recevoir des symboles de données (DMT10, DMT11, DMT20, DMT21, DMT31, DMT41) à une première puissance lorsqu'il fonctionne dans un premier état de puissance (LPS) et pour recevoir des symboles de données (DMT12, DMT22, DMT32, C_DMT41, DMT42) à une seconde puissance lorsqu'il fonctionne dans un second état de puissance (FPS), ledit agencement comprenant :
a. un moyen de réception (RXM) couplé entre une borne d'entrée et une borne de sortie dudit récepteur (RX) et adapté pour recevoir des symboles de données entrants transférés sur un support de communication (CM),
**caractérisé en ce que** ledit agencement comprend en outre :
b. un moyen de détection (QM, C, T), couplé à ladite borne d'entrée dudit récepteur (RX) et adapté pour détecter un symbole de données (DMT22, C_DMT41) transmis à ladite seconde puissance lorsque ledit moyen de réception (RXM) fonctionne dans ledit premier état de puissance (LPS) ; ledit moyen de détection (QM, C, T) comprenant :
b1. un moyen de mesure de qualité (QM), adapté pour mesurer la qualité dudit symbole de données (DMT22, C_DMT41) transmis à ladite seconde puissance ; et
b2. un moyen de comparaison (C), couplé audit moyen de mesure de qualité (QM) et adapté pour effectuer une comparaison de ladite qualité par rapport à une valeur de seuil prédéterminée (T) ; et
c. un moyen de transition (TRM'), couplé audit moyen de détection (C) et adapté pour amener ledit moyen de réception (RXM) dudit premier état de puissance (LPS) dans ledit second état de puissance (FPS), lors de la détection dudit symbole de données (DMT22, C_DMT41) transmis à ladite seconde puissance, ladite détection étant basée sur ladite comparaison.

7. Agencement de transition d'état selon la revendication 6,
**caractérisé en ce que** :
c1. ledit moyen de transition (TRM') est adapté pour être activé par ledit moyen de comparaison (C) dans le cas où ladite qualité dépasse ledit seuil prédéterminé (T) et en outre, **en ce que** ledit agencement comprend :
d. un moyen d'accumulation (ACM), couplé audit moyen de comparaison (C) et adapté pour accumuler ledit symbole de données (DMT22, C_DMT41) transmis à ladite seconde puissance, ledit moyen d'accumulation (ACM) étant adapté pour être activé par ledit moyen de comparaison (C), dans le cas où ladite qualité ne dépassé pas ledit seuil prédéterminé (T) et ladite première puissance est une faible puissance, ledit premier état de puissance (LPS) est un état à faible puissance, ladite seconde puissance est une pleine puissance et ledit second état de puissance (FPS) est un état à pleine puissance.

8. Système de communication comprenant un émetteur (TX), un support de communication (CM) et un récepteur (RX), dans lequel des symboles de données (DMT10, DMT11, DMT20, DMT21, DMT31, DMT41) sont transférés entre ledit émetteur (TX) et ledit récepteur (RX) à une première puissance dans un premier état de puissance (LPS) et dans lequel des symboles de données (DMT12, DMT22, DMT32, C_DMT41, DMT42) sont transférés entre ledit émetteur (TX) et ledit récepteur (RX) à une seconde puissance dans un second état de puissance (FPS),
**caractérisé en ce que** ledit émetteur (TX) comprend un agencement de transition d'état, ledit agencement comprenant :
a. un moyen d'émission (TXM), couplé entre une borne d'entrée et une borne de sortie dudit émetteur (TX) et adapté pour incorporer les données entrantes dans des symboles de données pour transmission sur un support de communication (CM) ;
b. un moyen de détection d'activité (ADM), couplé à ladite borne d'entrée dudit émetteur (TX) et adapté pour détecter une activité lorsque ledit moyen d'émission (TXM) fonctionne dans ledit premier état de puissance (LPS) ; et
c. un moyen de transition (TRM), couplé entre une sortie dudit moyen de détection d'activité (ADM) et une entrée de commande d'état dudit moyen d'émission (TXM) et adapté pour amener ledit moyen d'émission (TXM) dudit premier état de puissance (LPS) dans ledit second état de puissance (FPS),
dans lequel ledit moyen d'émission (TXM), lorsqu'il est amené dans ledit second état de puissance (FPS) sous le contrôle dudit moyen de transition (TRM), est adapté pour transmettre un symbole de données (DMT22, C_DMT41) à une seconde puissance sans envoyer d'abord une indication de transition d'état prédéterminée (PS), et ledit récepteur (RX) comprend un agencement de transition d'état tel que défini dans la revendication 8 ou la revendication 7.
